# EUROPEAN PATENT APPLICATION

(11) **EP 4 697 620 A1**
(43) Date of publication of application: **18.02.2026**
(21) Application number: 23932531.9
(22) Date of filing: 14.04.2023
(51) Int. Cl.: H04B 7/185

(54) **DATA TRANSMISSION METHOD AND SATELLITE**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: Mewburn Ellis LLP
(86) International application number: PCT/CN2023/088530
(87) International publication number: WO 2024/212250

(57) **Abstract**

This disclosure relates to a data transmission method and a satellite. The method includes the following. A first satellite receives data for a first terminal from a second satellite. The first satellite sends the data for the first terminal to the first terminal paged. In embodiments of the disclosure, the data for the first terminal is forwarded between satellites, so that the data can be timely forwarded to the first terminal paged, thereby reducing service latency.

## Description

### TECHNICAL FIELD

This disclosure relates to the field of communication, and more specifically to a data transmission method and a satellite.

### BACKGROUND

Non-terrestrial network (NTN) technology generally provides communication services for terrestrial users through satellite communication. In an NTN, in a store-and-forward operation mode, a service link for serving a user by a satellite and a feeder link between the satellite and a terrestrial gateway are generally not simultaneously available, which easily leads to high service latency.

### SUMMARY

A data transmission method and a satellite are provided in embodiments of the disclosure, which can effectively reduce service latency.

A data transmission method is provided in embodiments of the disclosure. The method includes the following. A first satellite receives data for a first terminal from a second satellite. The first satellite sends the data for the first terminal to the first terminal paged.

A data transmission method is provided in embodiments of the disclosure. The method includes the following. A second satellite sends data for a first terminal to a first satellite. The first satellite is configured to send the data for the first terminal to the first terminal paged.

A first satellite is provided in embodiments of the disclosure. The first satellite includes a first receiving unit and a first sending unit. The first receiving unit is configured to receive data for a first terminal from a second satellite. The first sending unit is configured to send the data for the first terminal to the first terminal paged.

A second satellite is provided in embodiments of the disclosure. The second satellite includes a second sending unit. The second sending unit is configured to send data for a first terminal to a first satellite. The first satellite is configured to send the data for the first terminal to the first terminal paged.

A satellite is provided in embodiments of the disclosure. The satellite includes a processor and a memory. The memory is configured to store a computer program. The processor is configured to invoke and execute the computer program stored in the memory, to cause the satellite to perform the above data transmission method.

A chip is provided in embodiments of the disclosure. The chip is configured to implement the above data transmission method.

Specifically, the chip includes a processor. The processor is configured to invoke and execute a computer program stored in a memory, to cause a device equipped with the chip to perform the above data transmission method.

A computer-readable storage medium is provided in embodiments of the disclosure. The computer-readable storage medium is configured to store a computer program which, when executed by a device, causes the device to perform the above data transmission method.

A computer program product is provided in embodiments of the disclosure. The computer program product includes computer program instructions which cause a computer to perform the above data transmission method.

A computer program is provided in embodiments of the disclosure. The computer program, when executed by a computer, causes the computer to perform the above data transmission method.

In embodiments of the disclosure, the data for the first terminal is forwarded between satellites, so that the data can be timely forwarded to the first terminal paged, thereby reducing service latency.

### BRIEF DESCRIPTION OF THE DRAWINGS

FIG. 1 is a schematic diagram of an application scenario according to embodiments of the disclosure.
FIG. 2 is a schematic diagram of a satellite transparent forwarding operation mode according to embodiments of the disclosure.
FIG. 3 is a schematic diagram of a satellite regenerative forwarding operation mode according to embodiments of the disclosure.
FIG. 4 is a schematic diagram of a conventional satellite operation mode.
FIG. 5 is a schematic diagram of a store-and-forward satellite operation mode.
FIG. 6 is a schematic flowchart of a data transmission method according to an embodiment of the disclosure.
FIG. 7 is a schematic flowchart of a data transmission method according to another embodiment of the disclosure.
FIG. 8 is a schematic flowchart of a data transmission method according to another embodiment of the disclosure.
FIG. 9 is a schematic flowchart of a data transmission method according to an embodiment of the disclosure.
FIG. 10 is a schematic flowchart of a data transmission method according to another embodiment of the disclosure.
FIG. 11 is a schematic flowchart of a first example of a data transmission method according to embodiments of the disclosure.
FIG. 12 is a schematic flowchart of a second example of a data transmission method according to embodiments of the disclosure.
FIG. 13 is a schematic block diagram of a first satellite according to an embodiment of the disclosure.
FIG. 14 is a schematic block diagram of a second satellite according to an embodiment of the disclosure.
FIG. 15 is a schematic structural diagram of a communication device according to embodiments of the disclosure.
FIG. 16 is a schematic structural diagram of a chip according to embodiments of the disclosure.
FIG. 17 is a schematic block diagram of a communication system according to embodiments of the disclosure.

### DETAILED DESCRIPTION

The following will describe technical solutions of embodiments of the disclosure with reference to the accompanying drawings in embodiments of the disclosure.

The technical solutions of the embodiments of the disclosure may be applied to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5th-generation (5G) system, or other communication systems.

Generally speaking, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, vehicle-to-everything (V2X) communication, or the like. Embodiments of the disclosure can also be applied to these communication systems.

In an embodiment, a communication system in embodiments of the disclosure may be applied to a carrier aggregation (CA) scenario, a dual connectivity (DC) scenario, or a standalone (SA) network deployment scenario.

In an embodiment, the communication system in embodiments of the disclosure may be applied to an unlicensed spectrum, and the unlicensed spectrum may be regarded as a shared spectrum. Alternatively, the communication system in embodiments of the disclosure may be applied to a licensed spectrum, and the licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, and the like.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device or other processing device connected to a wireless modem, an in-vehicle device, a wearable device, and a terminal device in a next-generation communication system, for example, a terminal device in an NR network, or a terminal device in a future evolved public land mobile network (PLMN), and the like.

In embodiments of the disclosure, the terminal device can be deployed on land, which includes indoor or outdoor, handheld, wearable, or in-vehicle. The terminal device can also be deployed on water (such as ships, and the like). The terminal device can also be deployed in the air (such as airplanes, balloons, satellites, and the like).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, or the like.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, a base transceiver station (BTS) in GSM or CDMA, or may be a node B (NB) in WCDMA, or may be an evolutional node B (eNB or eNodeB) in LTE, or a relay station or an AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

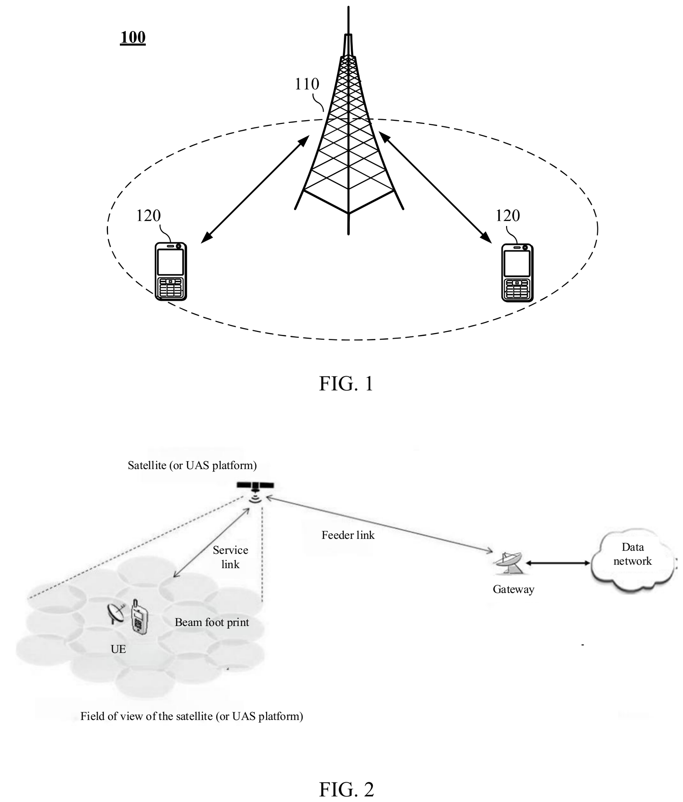

FIG. 1 exemplarily illustrates a communication system 100. The communication system 100 includes one network device 110 and two terminal devices 120. In an embodiment, the communication system 100 may include multiple network devices 110, and there can be other quantities of terminal devices 120 in a coverage area of each of the network devices 110. Embodiments of the disclosure are not limited in this regard.

In an embodiment, the communication system 100 may further include other network entities such as a mobility management entity (MME) and an access and mobility management function (AMF), and embodiments of the disclosure are not limited in this regard.

The network device may further include an access-network device and a core-network device, that is, the wireless communication system may further include multiple core-networks capable of communicating with the access-network device. The access-network device may be an evolutional node B (eNB or e-NodeB for short), a macro base station, a micro base station (also known as "small base station"), a pico base station, an AP, a transmission point (TP), or a new generation node B (gNodeB) in an LTE system, an NR system, or an authorized auxiliary access long-term evolution (LAA-LTE) system.

It may be understood that in embodiments of the disclosure, a device with communication functions in a network/system may be referred to as a "communication device". Taking the communication system illustrated in FIG. 1 as an example, the communication device may include the network device and the terminal device(s) that have communication functions. The network device and the terminal device(s) can be the devices in the embodiments of the disclosure, which will not be repeated herein. The communication device may further include other devices such as a network controller, a mobility management entity, or other network entities in the communication system, and embodiments of the disclosure are not limited in this regard.

It may be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It may be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association relationship between the two, or may mean a relationship of indicating and being indicated or configuring and being configured, etc.

For better understanding of technical solutions of embodiments of the disclosure, the related art of embodiments of the disclosure will be described below. The related art below, as an optional scheme, can be arbitrarily combined with the technical solutions of embodiments of the disclosure, which shall all belong to the protection scope of embodiments of the disclosure.

With the pursuit of people for rate, delay, high-speed mobility, and energy efficiency, and with the diversity and complexity of services in future life, the international standard organization 3rd generation partnership project (3GPP) has begun to develop 5G. Main application scenarios in 5G are enhanced mobile broadband (eMBB), ultra-reliable low latency communication (URLLC), and massive machine type communication (mMTC).

NR may also be deployed separately. In order to reduce air-interface signalling, quickly resume radio connections, and quickly resume data services, a new radio resource control (RRC) state, i.e., an RRC inactive (RRC_INACTIVE) state, is defined in a 5G network environment. This state is different from an RRC idle (RRC_IDLE) state and an RRC active (RRC_ACTIVE) state.

RRC_IDLE: Mobility is based on UE cell selection/reselection. Paging is initiated by a core network (CN). A paging area is configured by the CN. There is no UE access stratum (AS) context at a base station side. No RRC connection exists.

RRC connected (RRC_CONNECTED): An RRC connection exists. Both a base station and a UE have UE AS context. A network side knows that a location of the UE is based on a specific cell level. Mobility is controlled by the network side. Unicast data can be transmitted between the UE and the base station.

RRC_INACTIVE: Mobility is based on UE cell selection/reselection. There is a CN-NR connection. UE AS context exists at a certain base station. Paging is triggered by a radio access network (RAN), and an RAN-based paging area is managed by the RAN. A network side knows that a location of a UE is based on an RAN-based paging area level.

### NTN-related technology

NTN technology can provide communication services for terrestrial users through satellite communication. Compared with terrestrial cellular network communication, satellite communication has many unique advantages. First, satellite communication is not constrained by areas of users. For example, terrestrial communication is unable to cover areas without communication coverage like sparsely populated areas as well as areas where communication devices cannot be set up, such as oceans, mountains, and deserts. In contrast, for satellite communication, one satellite can cover a large ground and the satellite can orbit the earth. Therefore, in theory, every corner on the earth can be covered for satellite communication. Second, satellite communication has greater social value. Remote mountainous area and poverty-stricken and underdeveloped countries or regions can be covered for satellite communication at a low cost, so that people in these areas can enjoy advanced voice communication and mobile internet technologies, thereby narrowing a digital gap with developed areas and promoting the development of these areas. Third, a satellite has a long communication distance, and an increase in the communication distance will not lead to a substantial increase in the communication cost. Finally, satellite communication has high stability and is not constrained by natural disasters.

Communication satellites are classified into LEO satellites, MEO satellites, GEO satellites, HEO satellites, and the like according to different orbital altitudes.

### 1. LEO

For example, for an LEO satellite, an orbital altitude thereof is in the range of 500 kilometers (km) to 1500 km, a corresponding orbital period is approximately 1.5 hours to 2 hours, and a signal propagation delay of single-hop communication between users is generally less than 20 milliseconds (ms). A satellite has a maximum visibility time of 20 minutes, a short signal propagation distance, and a less link loss, and does not have high requirements on transmission power for a user terminal.

### 2. GEO

For example, for a GEO satellite, an orbital altitude thereof is 35786 km, a rotation period around the earth thereof is 24 hours, and a signal propagation delay of single-hop communication between users is generally 250 ms.

In order to ensure the coverage of the satellite and increase the system capacity of the entire satellite communication system, the satellite uses multi-beams to cover the ground. One satellite can provide dozens of or even hundreds of beams for ground coverage, and one beam can cover a ground area with a diameter of tens to hundreds of kilometers.

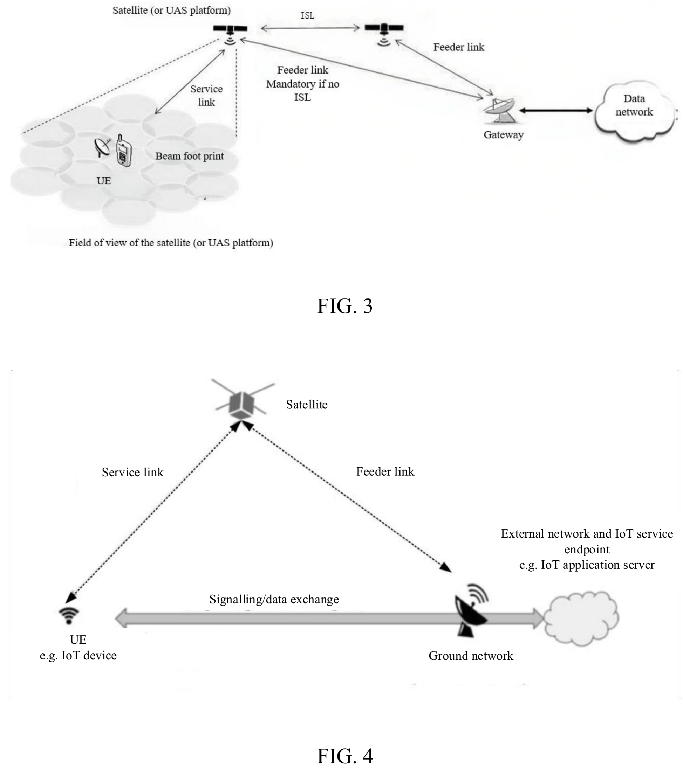

As illustrated in FIG. 2 and FIG. 3, there are two NTN network architectures for an NTN, namely transparent forwarding (payload) and regenerative forwarding (payload).

The NTN may include the following network elements:
(1) one or more gateways for connecting a satellite with a terrestrial public network;
(2) a feeder link for communication between the gateway and the satellite;
(3) a service link for communication between a terminal and the satellite;
(4) a satellite which may be classified into a transparent forwarding satellite and a regenerative forwarding satellite in terms of functions provided by the satellite.

Transparent forwarding, which only provides functions of radio frequency filtering and frequency conversion and amplification, and only provides transparent forwarding of a signal, without changing a waveform signal forwarded.

Regenerative forwarding, which may also provide functions of demodulation/decoding, routing/switch, and coding/modulation in addition to functions of radio frequency filtering and frequency conversion and amplification, and has part or all of functions of a base station.

An inter-satellite link (ISL), which exists in the regenerative forwarding network architecture.

### Store-and-forward mode

3GPP is currently considering satellites in a store-and-forward mode. In this mode, a service link for serving a user by a satellite and a feeder link between the satellite and a terrestrial gateway in an NTN are not simultaneously available. Therefore, the satellite needs to accordingly store transmitted data when a certain link is connected, and forward the data when another link is connected, thereby reducing the deployment cost of the terrestrial gateway and improving the deployment flexibility. That is, the terrestrial gateway does not need to be deployed in an area close to the user. This mode is applicable to services that are less sensitive/strict to latency.

FIG. 4 is a schematic diagram of a conventional satellite operation mode. In the conventional satellite operation mode, signalling/data exchange between a UE and a ground network via a satellite requires that a service link and a feeder link are simultaneously available, and thus, the end-to-end connection between the UE and the ground network via the satellite is continuous.

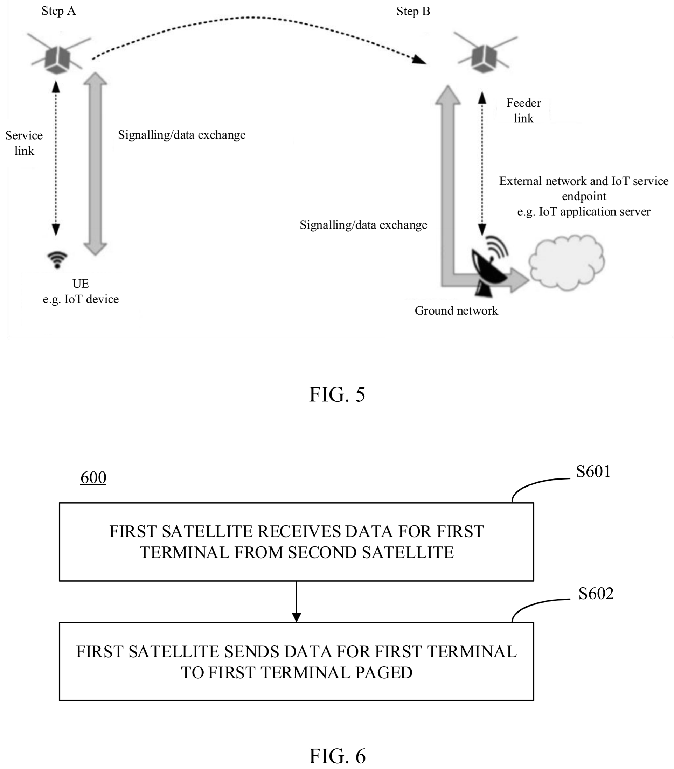

FIG. 5 is a schematic diagram of a store-and-forward satellite operation mode. In the store-and-forward operation mode, a service link and a feeder link are not simultaneously available, and signalling/data exchange between a UE and a ground network via a satellite includes the following operations.

Step A, signalling/data exchange is performed between the UE and the satellite via the service link, and in this case, no feeder link connection is established between the satellite and the ground network.

As the satellite gradually moves away from the UE, the service link between the satellite and the UE is disconnected.

Step B, when the satellite flies above the ground network, the satellite establishes a connection with the ground network, so that the satellite can communicate with the ground network via the feeder link.

For a satellite access system operating in the store-and-forward mode, a satellite needs to accordingly store transmitted data when a certain link is connected, and then forward the stored data when another link is connected. Compared with the conventional satellite operation mode, the store-and-forward mode may cause high service latency. The satellite may also have a time limit on the data stored therein. For one thing, the satellite capacity is taken into consideration, and for another, data itself also has a specific validity period. For a scenario where mobile terminated (MT) data arrives, after a core network sends MT data for a UE to a satellite, the satellite needs to wait until the satellite flies above the UE to page the UE and send to the UE the MT data stored therein. If the satellite does not successfully page the UE within limited serving time, then the satellite can have a chance to reattempt to page the UE only in the case of the next orbital revolution, and in this case, the satellite may have to discard the MT data due to expiry of the MT data stored therein.

According to embodiments of the disclosure, paging latency in the store-and-forward satellite operation mode can be reduced, a paging success rate can be improved, and user experience can be improved.

FIG. 6 is a schematic flowchart of a data transmission method according to an embodiment of the disclosure. Optionally, the method 600 can be applied to the system illustrated in FIG. 1, but is not limited thereto. The method includes at least part of the following contents.

At S601, a first satellite receives data for a first terminal from a second satellite.

At S602, the first satellite sends the data for the first terminal to the first terminal paged.

In embodiments of the disclosure, the first satellite and the second satellite may forward messages and/or data to each other via an inter-satellite link. The first satellite and/or the second satellite each may be in a store-and-forward operation mode. After obtaining data (referred to as "data for the first terminal" for short, such as MT data) that needs to be sent to the first terminal, the second satellite may forward the data to the first satellite via the inter-satellite link. The second satellite may receive the data for the first terminal from a network element such as an AMF or an MME of a core network, and the second satellite may also receive the data for the first terminal from another satellite. The second satellite may determine, according to information such as a star chart and a location of the first terminal, to forward the data for the first terminal to the first satellite. The first satellite may be a satellite close to the first terminal.

In embodiments of the disclosure, after receiving the data for the first terminal from the second satellite via the inter-satellite link, the first satellite may forward the data to the first terminal. The first satellite may first obtain the data for the first terminal, then page the first terminal, and then forward the data for the first terminal in the case where the first terminal is paged successfully. Alternatively, the first satellite may first page the first terminal, then request the data for the first terminal from the second satellite in the case where the first terminal is paged successfully, and then forward the data to the first terminal successfully paged.

In embodiments of the disclosure, the data for the first terminal is forwarded between satellites, so that the data can be timely forwarded to the first terminal successfully paged, thereby reducing service latency. For example, by means of forwarding a paging message and the data for the first terminal between satellites, paging latency can be reduced, a paging success rate can be improved, and user experience can be improved.

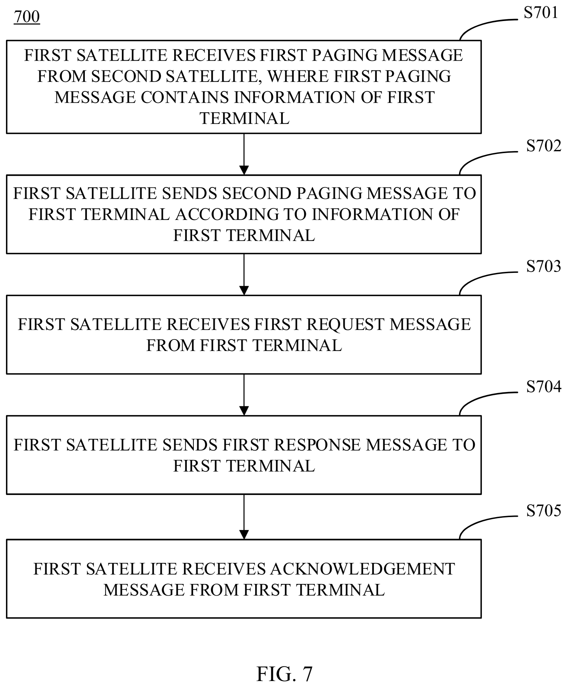

FIG. 7 is a schematic flowchart of a data transmission method according to another embodiment of the disclosure. The method 700 may include one or more features of the data transmission method in the above embodiment. In an embodiment, the method further includes the following.

At S701, the first satellite receives a first paging message from the second satellite, where the first paging message contains information of the first terminal.

In an embodiment, an inter-satellite link is between the first satellite and the second satellite, and a service link is between the first satellite and the first terminal.

In embodiments of the disclosure, the first satellite receives, via the inter-satellite link, the first paging message for the first terminal sent by the second satellite. The inter-satellite link can be implemented through an Xn/X2 interface (an interface between two base stations).

In an embodiment, the first terminal is in an unconnected state. For example, the first terminal is in an unconnected state before establishment of an RRC connection.

In an embodiment, the first satellite and/or the second satellite each are in a store-and-forward satellite operation mode.

In an embodiment, as illustrated in FIG. 7, the method further includes the following.

At S702, the first satellite sends a second paging message to the first terminal according to the information of the first terminal.

In embodiments of the disclosure, after the first satellite sends the second paging message to the first terminal according to the information of the first terminal, the first terminal having received the second paging message may establish a service link connection with the first satellite.

In an embodiment, as illustrated in FIG. 7, the method further includes the following.

At S703, the first satellite receives a first request message from the first terminal.

In embodiments of the disclosure, the first terminal having received the second paging message may send the first request message to the first satellite.

In an embodiment, the first request message is an RRC connection establishment request message or an early-data-transmission request message.

In embodiments of the disclosure, an RRC connection can be established between the first terminal and the first satellite, and MT data transmission is performed through the RRC connection. Alternatively, the first terminal may send the early-data-transmission request message to the first satellite, so that the first satellite can carry MT data in an early-data-transmission complete message.

In an embodiment, as illustrated in FIG. 7, the method further includes the following.

At S704, the first satellite sends a first response message to the first terminal.

In an embodiment, the first response message includes an RRC connection establishment message or an early-data-transmission complete message.

In embodiments of the disclosure, if the first request message is an RRC connection establishment request message, the first response message may be an RRC connection establishment message. If a request message is an early-data-transmission request message, the first response message may be an early-data-transmission complete message. If the request message is an early-data-transmission request message, the first terminal does not need to establish an RRC connection with a satellite, and the first terminal may remain in an RRC unconnected state.

In an embodiment, the first response message carries the data for the first terminal.

In embodiments of the disclosure, the RRC connection establishment message or the early-data-transmission complete message may carry the data for the first terminal.

In an embodiment, as illustrated in FIG. 7, the method further includes the following.

At S705, the first satellite receives an acknowledgement message from the first terminal.

In an embodiment, the acknowledgement message is an RRC connection establishment complete message.

In embodiments of the disclosure, if the first response message is an RRC connection establishment message, the acknowledgement message may be an RRC connection establishment complete message.

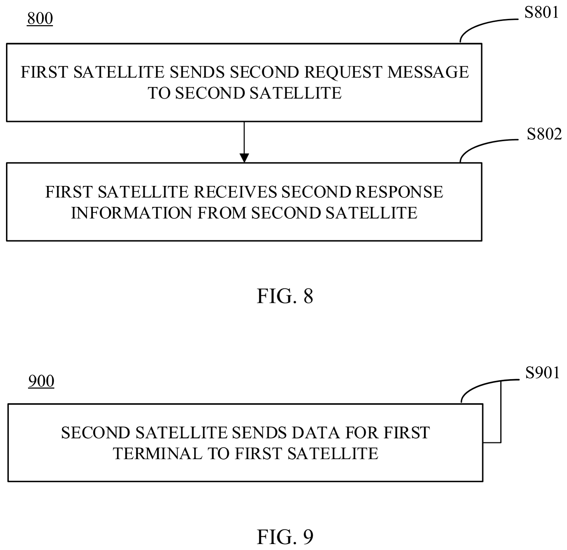

FIG. 8 is a schematic flowchart of a data transmission method according to another embodiment of the disclosure. The method 800 may include one or more features of the data transmission method in the above embodiment. In an embodiment, as illustrated in FIG. 8, the method further includes the following.

At S801, the first satellite sends a second request message to the second satellite.

In a case, after receiving the first paging message from the second satellite, the first satellite may send the second request message to the second satellite in the case where the first terminal is successfully paged, so as to request to obtain the data for the first terminal.

In another case, after receiving the first paging message from the second satellite, the first satellite may first send the second request message to the second satellite to request to obtain the data for the first terminal, and then page the first terminal.

In an embodiment, the second request message is a data forwarding request message.

In embodiments of the disclosure, the data forwarding request message may contain information of the first terminal, and the data for the first terminal can be obtained from the second satellite based on the data forwarding request message.

In an embodiment, the second request message contains one or more of: a terminal identity; a satellite identity or a cell identity corresponding to the first satellite; a cause for data request; a cause for RRC connection establishment request; and a cause for early-data-transmission request.

In an embodiment, the terminal identity includes at least one of: a 5th-generation serving temporary mobile subscription identifier (5G-S-TMSI); a truncated 5G-S-TMSI; an international mobile subscriber identity (IMSI); or a truncated IMSI.

In an embodiment, as illustrated in FIG. 8, the method further includes the following.

At S802, the first satellite receives second response information from the second satellite.

In embodiments of the disclosure, the second response information is response information for the first request message. If the first request message is a data forwarding request message, a second response message may be a data forwarding response message.

In an embodiment, the second response information contains a data forwarding response message and/or the data for the first terminal.

In a case, if the first satellite has already received the data for the first terminal before sending the second request message, the second response information may contain only the data forwarding response message, and does not contain the data for the first terminal.

In another case, if the first satellite has not received the data for the first terminal before sending the second request message, the second response information may contain the data forwarding response message and the data for the first terminal.

In another case, the second response information may contain no data forwarding response message and contain the data for the first terminal.

In embodiments of the disclosure, operations at S801 and S802 may be performed after operations at S704 or S705. In this case, the data for the first terminal can be sent to the first terminal through a separate message.

In embodiments of the disclosure, operations at S801 and S802 may also be performed after operations at S702 or S703 and before operations at S704. In this case, the data for the first terminal can be sent to the first terminal through the first response message or a separate message.

In an embodiment, the second satellite is an anchor-like satellite.

In an embodiment, the anchor-like satellite is capable of obtaining the data for the first terminal and/or a paging message from a core network.

In embodiments of the disclosure, the anchor-like satellite may interact with the core network and obtain and store the data for the first terminal from the core network. If the anchor-like satellite is unable to directly send the data for the first terminal to the first terminal in time, the anchor-like satellite may send the data for the first terminal to another satellite via an inter-satellite link according to a star chart, a location of the first terminal, and the like, and forward the data for the first terminal to the first terminal through another one-hop or multi-hop satellite.

In an embodiment, the second satellite is a relay satellite between the first satellite and an anchor-like satellite.

In an embodiment, at least one relay satellite exists between the first satellite and the anchor-like satellite.

In embodiments of the disclosure, one or more relay satellites may exist between the first satellite and the anchor-like satellite. In a case, the second satellite may serve as a relay satellite to directly obtain the data for the first terminal from the anchor-like satellite. In another case, the second satellite may serve as a relay satellite to obtain the data for the first terminal from the anchor-like satellite through another one-hop or multi-hop relay satellite. The first satellite may also be understood as a relay satellite between the second satellite and the first terminal.

In an embodiment, a message exchanged among the anchor-like satellite, the relay satellite, and the first satellite contains at least one of the following multi-hop transmission information: an identity of a source satellite; an identity of a target satellite; or a routing path.

In embodiments of the disclosure, if the anchor-like satellite needs to send the data for the first terminal to the first satellite through a one-hop or multi-hop satellite(s), a message(s) exchanged between the anchor-like satellite and the relay satellite may contain an identity of a source satellite, an identity of a target satellite, and a routing path. The identity of the source satellite may be an identity of the anchor-like satellite, and the identity of the target satellite may be an identity of the first satellite (a satellite that communicates with a terminal). The routing path may contain information of all satellites that need to be traversed from the anchor-like satellite to the first satellite.

For example, multi-hop transmission information in the second request message sent by the first satellite to the second satellite includes: an identity *N1* of a source node, an identity *M1* of a target node, and a routing path *N1-N2-M2-M1.* The second request message sent by the first satellite *N1* is forwarded to a relay satellite *M2* via the second satellite (relay satellite) *N2,* and then forwarded to an anchor-like satellite *M1* via the relay satellite *M2.* Multi-hop transmission information in the second response message sent by the anchor-like satellite to the first satellite includes: an identity *M1* of a source node, an identity *N1* of a target node, and a routing path *M1-M2-N2-N1.* The second response message sent by the anchor-like satellite *M1* is forwarded to the second satellite *N2* via the relay satellite *M2,* and then forwarded to the first satellite *N1* via the second satellite *N2.* Similarly, a paging message sent by the anchor-like satellite *M1* may also be forwarded to the first satellite *N1* via the relay satellites *M2* and *N2.*

In embodiments of the disclosure, a service link and a feeder link of a satellite in a store-and-forward satellite operation mode are not simultaneously available, and another satellite is used as a relay to forward data to the first terminal. Even if the anchor-like satellite is away from the first terminal, the data can still be timely forwarded to the first terminal. For example, an anchor-like satellite forwards a paging message for a certain UE to other satellites via inter-satellite links. In the case where the UE is successfully paged by a certain satellite, the satellite requests the anchor-like satellite to forward MT data for the UE, and then sends the received MT data to the UE.

FIG. 9 is a schematic flowchart of a data transmission method according to an embodiment of the disclosure. Optionally, the method 900 can be applied to the system illustrated in FIG. 1, but is not limited thereto. The method includes at least part of the following contents.

At S901, a second satellite sends data for a first terminal to a first satellite.

In embodiments of the disclosure, the second satellite may be an anchor-like satellite or a relay satellite. The first satellite may also be understood as a relay satellite between the second satellite and the first terminal.

In some examples, the anchor-like satellite may send the data for the first terminal to one or more relay satellites, and a relay satellite that can page the first terminal is the first satellite. The first satellite may serve as a serving satellite for the first terminal and forward the data for the first terminal to the first terminal. If a first-hop relay satellite is unable to page the first terminal, the data for the first terminal may be further sent to one or more next-hop relay satellites.

In some examples, the first satellite having successfully paged the first terminal may actively request the data for the first terminal. The first satellite may directly request the data for the first terminal from the anchor-like satellite, or may request the data for the first terminal from the anchor-like satellite through one-hop or multi-hop relay satellites.

In an embodiment, the first satellite is configured to send the data for the first terminal to the first terminal paged.

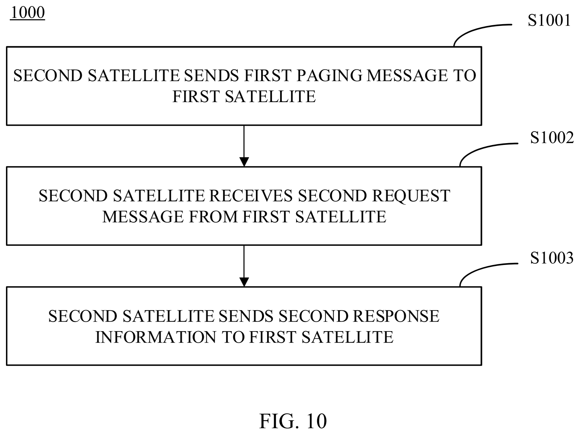

FIG. 10 is a schematic flowchart of a data transmission method according to another embodiment of the disclosure. The method 1000 may include one or more features of the data transmission method in the above embodiment. In an embodiment, the method further includes the following.

At S1001, the second satellite sends a first paging message to the first satellite. The first paging message contains information of the first terminal, and the first paging message indicates the first satellite to send a second paging message to the first terminal.

In an embodiment, the method further includes the following.

At S1002, the second satellite receives a second request message from the first satellite.

In an embodiment, the second request message is a data forwarding request message.

In an embodiment, the second request message contains one or more of: a terminal identity; a satellite identity or a cell identity corresponding to the first satellite; a cause for data request; a cause for RRC connection establishment request; and a cause for early-data-transmission request.

In an embodiment, the terminal identity includes at least one of: a 5G-S-TMSI; a truncated 5G-S-TMSI; an IMSI; or a truncated IMSI.

In an embodiment, as illustrated in FIG. 10, the method further includes the following.

At S1003, the second satellite sends second response information to the first satellite.

In an embodiment, the second response information contains the data for the first terminal.

In an embodiment, an inter-satellite link is between the first satellite and the second satellite, and a service link is between the first satellite and the first terminal.

In an embodiment, the second satellite is an anchor-like satellite.

In an embodiment, the second satellite is a relay satellite between the first satellite and an anchor-like satellite.

In an embodiment, at least one relay satellite exists between the first satellite and the anchor-like satellite.

In an embodiment, a message exchanged among the anchor-like satellite, the relay satellite, and the first satellite contains at least one of the following multi-hop transmission information: an identity of a source satellite; an identity of a target satellite; or a routing path.

In an embodiment, the anchor-like satellite is capable of obtaining the data for the first terminal and/or a paging message from a core network.

In an embodiment, the first terminal is in an unconnected state.

In an embodiment, the first satellite and/or the second satellite each are in a store-and-forward satellite operation mode.

For specific examples of performing the data transmission method by the second satellite in this embodiment, reference can be made to related illustrations of the second satellite in the above data transmission method, which will not be repeated herein for the sake of brevity.

The data transmission method provided in embodiments of the disclosure may be a paging transmission method in a store-and-forward satellite operation mode in an NTN. There are mainly the following manners.

Manner 1. An anchor-like satellite forwards a paging message for a certain UE to other satellites via inter-satellite links. In the case where the UE is successfully paged by a certain satellite, the satellite requests the anchor-like satellite to forward MT data for the UE, and then sends the received MT data to the UE.

Manner 2. An anchor-like satellite forwards MT data for a certain UE stored therein and a paging message for the UE to other satellites via inter-satellite links. In the case where the UE is successfully paged by a certain satellite, the satellite sends the received MT data to the UE.

Manner 3. For non-adjacent satellites, information exchange between an anchor-like satellite and another satellite supports multi-hop transmission.

Specific examples of different manners will be separately described below.

### First example

In a store-and-forward satellite operation mode, an anchor-like satellite forwards a paging message for a certain UE to other satellites via inter-satellite links. In the case where the UE is successfully paged by a certain satellite, the satellite requests the anchor-like satellite to forward MT data for the UE, and then sends the received MT data to the UE.

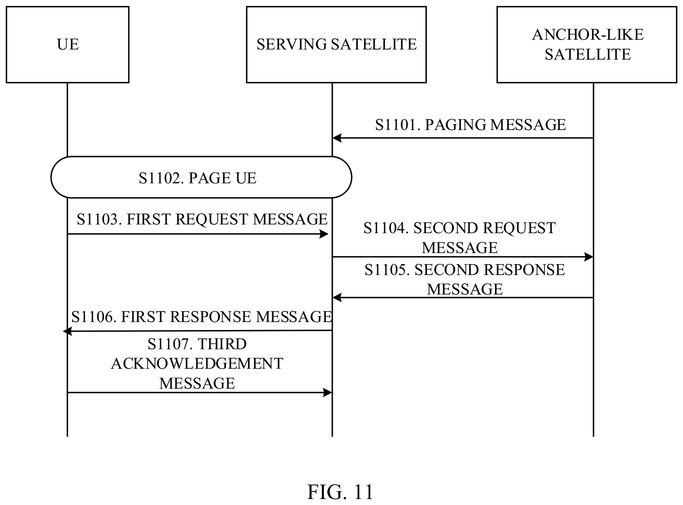

As illustrated in FIG. 11, a data transmission process is as follows.

At S1100 (not illustrated), the MT data arrives at a satellite. A core network AMF/MME sends the paging message and the MT data to a base station (satellite), and the satellite stores the paging message and the MT data. Herein, the satellite storing the MT data is referred to as the anchor-like satellite.

At S1101, the anchor-like satellite sends the stored paging message to another satellite (for example, satellite 1, where satellite 1 may be a serving satellite) via an inter-satellite link. The inter-satellite link can be implemented through an Xn/X2 interface.

At S1102, satellite 1 sends a paging message to the UE.

At S1103, the UE in an RRC unconnected state (for example, in an RRC idle state) receives the paging message from satellite 1, and the UE sends to satellite 1 a first request message, such as an RRC connection establishment request message *(RRCSetupRequest)* or an early-data-transmission request message (for example, *RRCEarlyDataRequest).*

At S1104, satellite 1 sends to the anchor-like satellite a second request message, such as a data forwarding request message. The second request message contains one or more of: a UE identity, such as a 5G-S-TMSI or a truncated 5G-S-TMSI (for example, taking part of bits of the 5G-S-TMSI), or an IMSI or a truncated IMSI (for example, taking part of bits of the IMSI); a satellite identity or a cell identity corresponding to satellite 1; a cause for data request; a cause for RRC connection establishment request; and a cause for early-data-transmission request.

At S1105, the anchor-like satellite sends a second response message to satellite 1. The second response message contains a data forwarding response message and/or the to-be-forwarded MT data for the UE stored therein.

At S1106, satellite 1 sends to the UE a first response message, such as an RRC connection establishment message *(RRCSetup)* or an early-data-transmission complete message (for example, *RRCEarlyDataComplete).*

Optionally, in this step, satellite 1 may also send the MT data to the UE.

At S1107, the UE sends to satellite 1 an acknowledgement message, such as an RRC connection establishment complete message (*RRCSetupComplete*)*.*

Optionally, the above step 4 and/or step 5 may also be performed after step 6 or step 7.

### Second example

In a store-and-forward satellite operation mode, an anchor-like satellite forwards MT data for a certain UE stored therein and a paging message for the UE to other satellites via inter-satellite links. In the case where the UE is successfully paged by a certain satellite, the satellite sends the MT data to the UE.

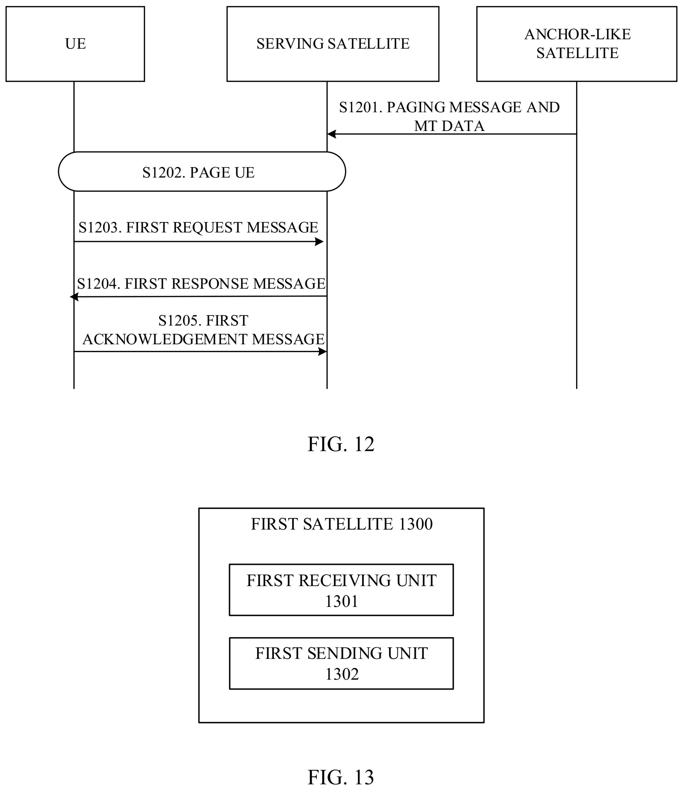

As illustrated in FIG. 12, a data transmission process is as follows.

At S1200 (not illustrated), the MT data arrives at a satellite. A core network

AMF/MME sends the paging message and the MT data to a base station (satellite), and the satellite stores the paging message and the MT data. Herein, the satellite storing the MT data is referred to as the anchor-like satellite.

At S1201, the anchor-like satellite sends the stored paging message for the UE and the MT data to another satellite (for example, satellite 1, where satellite 1 may be a serving satellite) via an inter-satellite link. The inter-satellite link can be implemented through an Xn/X2 interface.

At S1202, satellite 1 sends a paging message to the UE.

At S1203, the UE in an RRC unconnected state (for example, in an RRC idle state) receives the paging message from satellite 1, and the UE sends to satellite 1 a first request message, such as an RRC connection establishment request message *(RRCSetupRequest)* or an early-data-transmission request message (for example, *RRCEarlyDataRequest).*

At S1204, satellite 1 sends to the UE a first response message, such as an RRC connection establishment message *(RRCSetup)* or an early-data-transmission complete message (for example, *RRCEarlyDataComplete).*

Optionally, in this step, satellite 1 may also send the MT data to the UE.

At S1205, the UE sends to satellite 1 an acknowledgement message, such as an RRC connection establishment complete message *(RRCSetupComplete).*

### Third example

For non-adjacent satellites, information exchange between an anchor-like satellite and another satellite such as a serving satellite supports multi-hop transmission.

A data transmission process is as follows. For operations at S1101, S1104, and S1105 in a first example and operations at S1201 in a second example, if there is no direct inter-satellite link between the anchor-like satellite and satellite 1, message transmission between the anchor-like satellite and satellite 1 can be realized through multi-hop transmission. For example, satellite 2 and satellite 3 are used as relay satellites for message transmission. Further, a message such as a paging message, a second request message, or a second response message exchanged between the anchor-like satellite and satellite 1 may contain one or more of: an identity of a source satellite corresponding to the message; an identity of a target satellite corresponding to the message; and a routing path of the message.

The data transmission method in embodiments of the disclosure can be used for paging a terminal in a store-and-forward satellite operation mode in an NTN. By introducing a mechanism for forwarding a paging message and MT data between different satellites, paging latency can be effectively reduced, and a paging success rate can be improved.

FIG. 13 is a schematic block diagram of a first satellite 1300 according to an embodiment of the disclosure. The first satellite 1300 may include a first receiving unit 1301 and a first sending unit 1302. The first receiving unit 1301 is configured to receive data for a first terminal from a second satellite. The first sending unit 1302 is configured to send the data for the first terminal to the first terminal paged.

In an embodiment, the first receiving unit 1301 is configured to receive a first paging message from the second satellite. The first paging message contains information of the first terminal.

In an embodiment, the first sending unit 1302 is configured to send a second paging message to the first terminal according to the information of the first terminal.

In an embodiment, the first receiving unit 1301 is configured to receive a first request message from the first terminal.

In an embodiment, the first request message is an RRC connection establishment request message or an early-data-transmission request message.

In an embodiment, the first sending unit 1302 is configured to send a first response message to the first terminal.

In an embodiment, the first response message includes an RRC connection establishment message or an early-data-transmission complete message.

In an embodiment, the first response message carries the data for the first terminal.

In an embodiment, the first receiving unit 1301 is configured to receive an acknowledgement message from the first terminal.

In an embodiment, the acknowledgement message is an RRC connection establishment complete message.

In an embodiment, the first sending unit 1302 is configured to send a second request message to the second satellite.

In an embodiment, the second request message is a data forwarding request message.

In an embodiment, the second request message contains one or more of: a terminal identity; a satellite identity or a cell identity corresponding to the first satellite; a cause for data request; a cause for RRC connection establishment request; and a cause for early-data-transmission request.

In an embodiment, the terminal identity includes at least one of: a 5G-S-TMSI; a truncated 5G-S-TMSI; an IMSI; or a truncated IMSI.

In an embodiment, the first receiving unit 1301 is configured to receive second response information from the second satellite.

In an embodiment, the second response information contains a data forwarding response message and/or the data for the first terminal.

In an embodiment, an inter-satellite link is between the first satellite and the second satellite, and a service link is between the first satellite and the first terminal.

In an embodiment, the second satellite is an anchor-like satellite.

In an embodiment, the second satellite is a relay satellite between the first satellite and an anchor-like satellite.

In an embodiment, at least one relay satellite exists between the first satellite and the anchor-like satellite.

In an embodiment, a message exchanged among the anchor-like satellite, the relay satellite, and the first satellite contains at least one of the following multi-hop transmission information: an identity of a source satellite; an identity of a target satellite; or a routing path.

In an embodiment, the anchor-like satellite is capable of obtaining the data for the first terminal and/or a paging message from a core network.

In an embodiment, the first terminal is in an unconnected state.

In an embodiment, the first satellite and/or the second satellite each are in a store-and-forward satellite operation mode.

The first satellite 1300 in embodiments of the disclosure can implement corresponding functions of the first satellite in the foregoing method embodiments. For the procedure, function, implementation, and advantage corresponding to each module (sub-module, unit, or assembly, etc.) in the first satellite 1300, reference can be made to the corresponding illustrations in the foregoing method embodiments, which will not be repeated herein. It may be noted that, the functions of various modules (sub-modules, units, or assemblies, etc.) in the first satellite 1300 described in embodiments of the disclosure may be implemented by different modules (sub-modules, units, or assemblies, etc.), or may be implemented by the same module (sub-module, unit, or assembly, etc.).

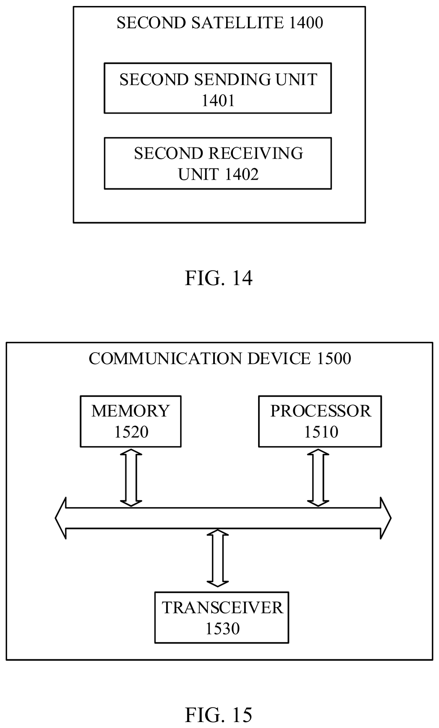

FIG. 14 is a schematic block diagram of a second satellite 1400 according to an embodiment of the disclosure. The second satellite 1400 may include a second sending unit 1401. The second sending unit 1401 is configured to send data for a first terminal to a first satellite. The first satellite is configured to send the data for the first terminal to the first terminal paged.

In an embodiment, the second sending unit 1401 is configured to send a first paging message to the first satellite. The first paging message contains information of the first terminal, and the first paging message indicates the first satellite to send a second paging message to the first terminal.

In an embodiment, the second satellite further includes a second receiving unit 1402. The second receiving unit 1402 is configured to receive a second request message from the first satellite.

In an embodiment, the second request message is a data forwarding request message.

In an embodiment, the second request message contains one or more of: a terminal identity; a satellite identity or a cell identity corresponding to the first satellite; a cause for data request; a cause for RRC connection establishment request; and a cause for early-data-transmission request.

In an embodiment, the terminal identity includes at least one of: a 5G-S-TMSI; a truncated 5G-S-TMSI; an IMSI; or a truncated IMSI.

In an embodiment, the second sending unit 1401 is configured to send second response information to the first satellite.

In an embodiment, the second response information contains the data for the first terminal.

In an embodiment, an inter-satellite link is between the first satellite and the second satellite, and a service link is between the first satellite and the first terminal.

In an embodiment, the second satellite is an anchor-like satellite.

In an embodiment, the second satellite is a relay satellite between the first satellite and an anchor-like satellite.

In an embodiment, at least one relay satellite exists between the first satellite and the anchor-like satellite.

In an embodiment, a message exchanged among the anchor-like satellite, the relay satellite, and the first satellite contains at least one of the following multi-hop transmission information: an identity of a source satellite; an identity of a target satellite; or a routing path.

In an embodiment, the anchor-like satellite is capable of obtaining the data for the first terminal and/or a paging message from a core network.

In an embodiment, the first terminal is in an unconnected state.

In an embodiment, the first satellite and/or the second satellite each are in a store-and-forward satellite operation mode.

The second satellite 1400 in embodiments of the disclosure can implement corresponding functions of the second satellite in the foregoing method embodiments. For the procedure, function, implementation, and advantage corresponding to each module (sub-module, unit, or assembly, etc.) in the second satellite 1400, reference can be made to the corresponding illustrations in the foregoing method embodiments, which will not be repeated herein. It may be noted that, the functions of various modules (sub-modules, units, or assemblies, etc.) in the second satellite 1400 described in embodiments of the disclosure may be implemented by different modules (sub-modules, units, or assemblies, etc.), or may be implemented by the same module (sub-module, unit, or assembly, etc.).

FIG. 15 is a schematic structural diagram of a communication device 1500 according to embodiments of the disclosure. The communication device 1500 includes a processor 1510. The processor 1510 may invoke and execute a computer program stored in a memory, to cause the communication device 1500 to implement the method in embodiments of the disclosure.

In an embodiment, the communication device 1500 may further include a memory 1520. The processor 1510 may invoke and execute a computer program stored in the memory 1520, to cause the communication device 1500 to implement the method in embodiments of the disclosure.

The memory 1520 may be a separate device independent of the processor 1510, or may be integrated into the processor 1510.

In an embodiment, the communication device 1500 may further include a transceiver 1530. The processor 1510 may control the transceiver 1530 to communicate with another device, and specifically, may send information or data to another device, or receive information or data from the another device.

The transceiver 1530 may include a transmitter and a receiver. The transceiver 1530 may further include an antenna, where one or more antennas may be provided.

In an embodiment, the communication device 1500 may be the first satellite in embodiments of the disclosure, and the communication device 1500 may implement corresponding procedures implemented by the first satellite in the methods according to embodiments of the disclosure, which will not be repeated herein for the sake of brevity.

In an embodiment, the communication device 1500 may be the second satellite in embodiments of the disclosure, and the communication device 1500 may implement corresponding procedures implemented by the second satellite in the methods according to embodiments of the disclosure, which will not be repeated herein for the sake of brevity.

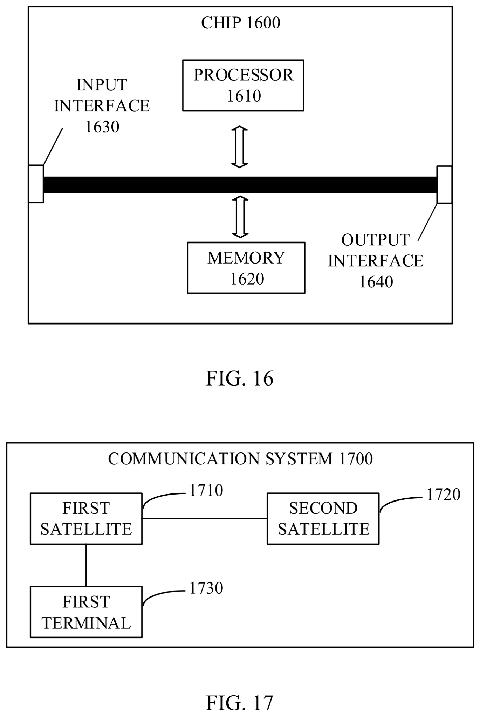

FIG. 16 is a schematic structural diagram of a chip 1600 according to embodiments of the disclosure. The chip 1600 includes a processor 1610. The processor 1610 may invoke and execute a computer program stored in a memory to implement the method in embodiments of the disclosure.

In an embodiment, the chip 1600 may further include a memory 1620. The processor 1610 may invoke and execute a computer program stored in the memory 1620, to implement the method performed by the first satellite or the second satellite in embodiments of the disclosure.

The memory 1620 may be a separate device independent of the processor 1610, or may be integrated into the processor 1610.

In an embodiment, the chip 1600 may further include an input interface 1630. The processor 1610 may control the input interface 1630 to communicate with another device or chip, and specifically, may obtain information or data sent by the another device or chip.

In an embodiment, the chip 1600 may further include an output interface 1640. The processor 1610 may control the output interface 1640 to communicate with another device or chip, and specifically, may output information or data to the another device or chip.

In an embodiment, the chip may be applied to the first satellite in embodiments of the disclosure, and the chip may implement corresponding procedures implemented by the first satellite in the methods according to embodiments of the disclosure, which will not be repeated herein for the sake of brevity.

In an embodiment, the chip may be applied to the second satellite in embodiments of the disclosure, and the chip may implement corresponding procedures implemented by the second satellite in the methods according to embodiments of the disclosure, which will not be repeated herein for the sake of brevity.

The chip applied to the first satellite may be the same as or different from the chip applied to the second satellite.

It may be understood that, the chip mentioned in embodiments of the disclosure may also be a system-on-chip (SoC).

The processor mentioned above may be a general-purpose processor, a digital signal processor (DSP), a field programmable gate array (FPGA), an application specific integrated circuit (ASIC), or another programmable logic device, a transistor logic device, a discrete hardware component, or the like. The general-purpose processor may be a microprocessor, or may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

FIG. 17 is a schematic block diagram of a communication system 1700 according to embodiments of the disclosure. The communication system 1700 includes a first satellite 1710 and a second satellite 1720.

The first satellite 1710 is configured to receive data for a first terminal from a second satellite, and send the data for the first terminal to the first terminal paged.

The second satellite 1720 is configured to send data for a first terminal to a first satellite.

The first satellite 1710 can be configured to implement corresponding functions implemented by the first satellite in the foregoing methods, and the second satellite 1720 can be configured to implement corresponding functions implemented by the second satellite in the foregoing methods, which will not be repeated herein for the sake of brevity.

In an embodiment, the communication system may further include a first terminal 1730. The first terminal 1730 is configured to receive data for the first terminal from a second satellite.

In an embodiment, the second satellite 1720 may be an anchor-like satellite.

In an embodiment, the second satellite 1720 is a relay satellite between an anchor-like satellite and the first satellite. The communication system may include the anchor-like satellite and multiple second satellites 1720.

All or part of the above embodiments can be implemented through software, hardware, firmware, or any other combination thereof. When implemented by software, all or part of the above embodiments can be implemented in the form of a computer program product. The computer program product includes one or more computer instructions. When the computer program instructions are applied and executed on a computer, all or part of the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It may be understood that in various embodiments of the disclosure, the magnitude of a sequence number of each of the above processes does not mean an execution order, and an execution order of each process can be determined according to a function and an internal logic of the process, which shall not constitute any limitation to an implementation process of embodiments of the disclosure.

It will be evident to those skilled in the art that, for the sake of convenience and brevity, in terms of the specific working processes of the foregoing systems, apparatuses, and units, reference can be made to the corresponding processes in the above method embodiments, which will not be repeated herein.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A data transmission method, comprising:
receiving, by a first satellite, data for a first terminal from a second satellite; and
sending, by the first satellite, the data for the first terminal to the first terminal paged.

2. The method of claim 1, further comprising:
receiving, by the first satellite, a first paging message from the second satellite, wherein the first paging message contains information of the first terminal.

3. The method of claim 2, further comprising:
sending, by the first satellite, a second paging message to the first terminal according to the information of the first terminal.

4. The method of any one of claims 1 to 3, further comprising:
receiving, by the first satellite, a first request message from the first terminal.

5. The method of claim 4, wherein the first request message is a radio resource control (RRC) connection establishment request message or an early-data-transmission request message.

6. The method of claim 4 or 5, further comprising:
sending, by the first satellite, a first response message to the first terminal.

7. The method of claim 6, wherein the first response message comprises an RRC connection establishment message or an early-data-transmission complete message.

8. The method of claim 6 or 7, wherein the first response message carries the data for the first terminal.

9. The method of any one of claims 6 to 8, further comprising:
receiving, by the first satellite, an acknowledgement message from the first terminal.

10. The method of claim 9, wherein the acknowledgement message is an RRC connection establishment complete message.

11. The method of any one of claims 1 to 10, further comprising:
sending, by the first satellite, a second request message to the second satellite.

12. The method of claim 11, wherein the second request message is a data forwarding request message.

13. The method of claim 11 or 12, wherein the second request message contains one or more of: a terminal identity; a satellite identity or a cell identity corresponding to the first satellite; a cause for data request; a cause for RRC connection establishment request; and a cause for early-data-transmission request.

14. The method of claim 13, wherein the terminal identity comprises at least one of: a 5th-generation serving temporary mobile subscription identifier (5G-S-TMSI); a truncated 5G-S-TMSI; an international mobile subscriber identity (IMSI); or a truncated IMSI.

15. The method of any one of claims 11 to 14, further comprising:
receiving, by the first satellite, second response information from the second satellite.

16. The method of claim 15, wherein the second response information contains a data forwarding response message and/or the data for the first terminal.

17. The method of any one of claims 1 to 16, wherein an inter-satellite link (ISL) is between the first satellite and the second satellite, and a service link is between the first satellite and the first terminal.

18. The method of any one of claims 1 to 17, wherein the second satellite is an anchor-like satellite.

19. The method of any one of claims 1 to 17, wherein the second satellite is a relay satellite between the first satellite and an anchor-like satellite.

20. The method of claim 19, wherein at least one relay satellite exists between the first satellite and the anchor-like satellite.

21. The method of claim 19 or 20, wherein a message exchanged among the anchor-like satellite, the relay satellite, and the first satellite contains at least one of the following multi-hop transmission information: an identity of a source satellite; an identity of a target satellite; or a routing path.

22. The method of any one of claims 18 to 21, wherein the anchor-like satellite is capable of obtaining the data for the first terminal and/or a paging message from a core network.

23. The method of any one of claims 1 to 22, wherein the first terminal is in an unconnected state.

24. The method of any one of claims 1 to 23, wherein the first satellite and/or the second satellite each are in a store-and-forward satellite operation mode.

25. A data transmission method, comprising:
sending, by a second satellite, data for a first terminal to a first satellite, wherein
the first satellite is configured to send the data for the first terminal to the first terminal paged.

26. The method of claim 25, further comprising:
sending, by the second satellite, a first paging message to the first satellite, wherein the first paging message contains information of the first terminal, and the first paging message indicates the first satellite to send a second paging message to the first terminal.

27. The method of claim 25 or 26, further comprising:
receiving, by the second satellite, a second request message from the first satellite.

28. The method of claim 27, wherein the second request message is a data forwarding request message.

29. The method of claim 27 or 28, wherein the second request message contains one or more of: a terminal identity; a satellite identity or a cell identity corresponding to the first satellite; a cause for data request; a cause for RRC connection establishment request; and a cause for early-data-transmission request.

30. The method of claim 29, wherein the terminal identity comprises at least one of: a 5th-generation serving temporary mobile subscription identifier (5G-S-TMSI); a truncated 5G-S-TMSI; an international mobile subscriber identity (IMSI); or a truncated IMSI.

31. The method of any one of claims 27 to 30, further comprising:
sending, by the second satellite, second response information to the first satellite.

32. The method of claim 31, wherein the second response information contains the data for the first terminal.

33. The method of any one of claims 25 to 32, wherein an inter-satellite link (ISL) is between the first satellite and the second satellite, and a service link is between the first satellite and the first terminal.

34. The method of any one of claims 25 to 33, wherein the second satellite is an anchor-like satellite.

35. The method of any one of claims 25 to 33, wherein the second satellite is a relay satellite between the first satellite and an anchor-like satellite.

36. The method of claim 35, wherein at least one relay satellite exists between the first satellite and the anchor-like satellite.

37. The method of claim 35 or 36, wherein a message exchanged among the anchor-like satellite, the relay satellite, and the first satellite contains at least one of the following multi-hop transmission information: an identity of a source satellite; an identity of a target satellite; or a routing path.

38. The method of any one of claims 34 to 37, wherein the anchor-like satellite is capable of obtaining the data for the first terminal and/or a paging message from a core network.

39. The method of any one of claims 25 to 38, wherein the first terminal is in an unconnected state.

40. The method of any one of claims 25 to 39, wherein the first satellite and/or the second satellite each are in a store-and-forward satellite operation mode.

41. A first satellite, comprising:
a first receiving unit configured to receive data for a first terminal from a second satellite; and
a first sending unit configured to send the data for the first terminal to the first terminal paged.

42. The first satellite of claim 41, wherein the first receiving unit is configured to receive a first paging message from the second satellite, wherein the first paging message contains information of the first terminal.

43. The first satellite of claim 42, wherein the first sending unit is configured to send a second paging message to the first terminal according to the information of the first terminal.

44. The first satellite of any one of claims 41 to 43, wherein the first receiving unit is configured to receive a first request message from the first terminal.

45. The first satellite of claim 44, wherein the first request message is a radio resource control (RRC) connection establishment request message or an early-data-transmission request message.

46. The first satellite of claim 44 or 45, wherein the first sending unit is configured to send a first response message to the first terminal.

47. The first satellite of claim 46, wherein the first response message comprises an RRC connection establishment message or an early-data-transmission complete message.

48. The first satellite of claim 46 or 47, wherein the first response message carries the data for the first terminal.

49. The first satellite of any one of claims 46 to 48, wherein the first receiving unit is configured to receive an acknowledgement message from the first terminal.

50. The first satellite of claim 49, wherein the acknowledgement message is an RRC connection establishment complete message.

51. The first satellite of any one of claims 41 to 50, wherein the first sending unit is configured to send a second request message to the second satellite.

52. The first satellite of claim 51, wherein the second request message is a data forwarding request message.

53. The first satellite of claim 51 or 52, wherein the second request message contains one or more of: a terminal identity; a satellite identity or a cell identity corresponding to the first satellite; a cause for data request; a cause for RRC connection establishment request; and a cause for early-data-transmission request.

54. The first satellite of claim 53, wherein the terminal identity comprises at least one of: a 5th-generation serving temporary mobile subscription identifier (5G-S-TMSI); a truncated 5G-S-TMSI; an international mobile subscriber identity (IMSI); or a truncated IMSI.

55. The first satellite of any one of claims 51 to 54, wherein the first receiving unit is configured to receive second response information from the second satellite.

56. The first satellite of claim 55, wherein the second response information contains a data forwarding response message and/or the data for the first terminal.

57. The first satellite of any one of claims 41 to 56, wherein an inter-satellite link (ISL) is between the first satellite and the second satellite, and a service link is between the first satellite and the first terminal.

58. The first satellite of any one of claims 41 to 57, wherein the second satellite is an anchor-like satellite.

59. The first satellite of any one of claims 41 to 57, wherein the second satellite is a relay satellite between the first satellite and an anchor-like satellite.

60. The first satellite of claim 59, wherein at least one relay satellite exists between the first satellite and the anchor-like satellite.

61. The first satellite of claim 59 or 60, wherein a message exchanged among the anchor-like satellite, the relay satellite, and the first satellite contains at least one of the following multi-hop transmission information: an identity of a source satellite; an identity of a target satellite; or a routing path.

62. The first satellite of any one of claims 58 to 61, wherein the anchor-like satellite is capable of obtaining the data for the first terminal and/or a paging message from a core network.

63. The first satellite of any one of claims 41 to 62, wherein the first terminal is in an unconnected state.

64. The first satellite of any one of claims 41 to 63, wherein the first satellite and/or the second satellite each are in a store-and-forward satellite operation mode.

65. A second satellite, comprising:
a second sending unit configured to send data for a first terminal to a first satellite, wherein
the first satellite is configured to send the data for the first terminal to the first terminal paged.

66. The second satellite of claim 65, wherein the second sending unit is configured to send a first paging message to the first satellite, wherein the first paging message contains information of the first terminal, and the first paging message indicates the first satellite to send a second paging message to the first terminal.

67. The second satellite of claim 65 or 66, further comprising:
a second receiving unit configured to receive a second request message from the first satellite.

68. The second satellite of claim 67, wherein the second request message is a data forwarding request message.

69. The second satellite of claim 67 or 68, wherein the second request message contains one or more of: a terminal identity; a satellite identity or a cell identity corresponding to the first satellite; a cause for data request; a cause for RRC connection establishment request; and a cause for early-data-transmission request.

70. The second satellite of claim 69, wherein the terminal identity comprises at least one of: a 5th-generation serving temporary mobile subscription identifier (5G-S-TMSI); a truncated 5G-S-TMSI; an international mobile subscriber identity (IMSI); or a truncated IMSI.

71. The second satellite of any one of claims 67 to 70, wherein the second sending unit is configured to send second response information to the first satellite.

72. The second satellite of claim 71, wherein the second response information contains the data for the first terminal.

73. The second satellite of any one of claims 65 to 72, wherein an inter-satellite link (ISL) is between the first satellite and the second satellite, and a service link is between the first satellite and the first terminal.

74. The second satellite of any one of claims 65 to 73, wherein the second satellite is an anchor-like satellite.

75. The second satellite of any one of claims 65 to 73, wherein the second satellite is a relay satellite between the first satellite and an anchor-like satellite.

76. The second satellite of claim 75, wherein at least one relay satellite exists between the first satellite and the anchor-like satellite.

77. The second satellite of claim 75 or 76, wherein a message exchanged among the anchor-like satellite, the relay satellite, and the first satellite contains at least one of the following multi-hop transmission information: an identity of a source satellite; an identity of a target satellite; or a routing path.

78. The second satellite of any one of claims 74 to 77, wherein the anchor-like satellite is capable of obtaining the data for the first terminal and/or a paging message from a core network.

79. The second satellite of any one of claims 65 to 78, wherein the first terminal is in an unconnected state.

80. The second satellite of any one of claims 65 to 79, wherein the first satellite and/or the second satellite each are in a store-and-forward satellite operation mode.

81. A satellite, comprising a processor and a memory, wherein the memory is configured to store a computer program, and the processor is configured to invoke and execute the computer program stored in the memory, to cause the satellite to perform the method of any one of claims 1 to 24 or the method of any one of claims 25 to 40.

82. A chip, comprising:
a processor configured to invoke and execute a computer program stored in a memory, to cause a device equipped with the chip to perform the method of any one of claims 1 to 24 or the method of any one of claims 25 to 40.

83. A computer-readable storage medium configured to store a computer program which, when executed by a device, causes the device to perform the method of any one of claims 1 to 24 or the method of any one of claims 25 to 40.

84. A computer program product comprising computer program instructions which cause a computer to perform the method of any one of claims 1 to 24 or the method of any one of claims 25 to 40.

85. A computer program causing a computer to perform the method of any one of claims 1 to 24 or the method of any one of claims 25 to 40.
